# EUROPEAN PATENT APPLICATION

(11) **EP 4 794 162 A1**
(43) Date of publication of application: **19.08.2026**
(21) Application number: 25158263.1
(22) Date of filing: 17.02.2025
(51) Int. Cl.: H02J 7/00, B60L 53/62, B60L 53/63, B60L 53/67

(54) **A CHARGER**

(71) Applicant: AutoStore Technology AS, 5578 Nedre Vats (NO)
(72) Inventor: FJELDHEIM, Ivar, 5578 Nedre Vats (NO)
(74) Representative: Kilburn & Strode LLP

(57) **Abstract**

The disclosure relates to a charger for an automated storage and retrieval system having a first charging point (511) configured to charge a first connected vehicle (610) according to a first charging profile (710), a second charging point (512) configured to charge a second connected vehicle (620) according to a second charging profile (820) and concurrently to the charging of the first connected vehicle, and a power supply configured to supply power (520) to the first charging point and the second charging point, the power supply having a maximum power supply capacity, wherein the charger is configured to determine that a sum of the first charging profile and the second charging profile at a first point in time exceeds the maximum power supply capacity, and in response to determining, modify the second charging profile such that the sum of the first charging profile and the second charging profile at the first point in time does not exceed the maximum power supply capacity.

## Description

### TECHNICAL FIELD

The disclosure relates to a charger. More particularly, it relates to a charger and methods of charging in which the charging profiles of connected vehicles are adjusted so that a maximum power supply capacity is not exceeded.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

The robotic container handling vehicles include batteries in order to power their movements, and tasks. When the batteries are depleted, they may be charged at charging points. The effective charging of batteries, especially high capacity batteries such as lithium ion batteries, requires certain charging profiles to be used. Charging profiles may only require a maximum charging current for a certain period of time. Multiple chargers may be connected to the same power supply to allow for each charging point to draw power from the power supply simultaneously. Typically, the number of charging points will be limited according to the maximum power supply capacity, otherwise the power supply may be overloaded. Such a maximum number may limit charging points available to be used.

It is not essential that the number of charging points is limited according to the maximum charging capacity for the main charge of each charging point connected to the power supply. Typically, the number of charging points may be limited according to how many chargers are likely to be used at the same time to avoid damage to the power supply. However, as charging profiles are more complex than a simple on or off, maximum charging current, it is possible to benefit from the pre-charge or trickle charge of some vehicles whilst the main charge of other vehicles is completed. This overlap between charging of vehicles may make better use of the available power supply for charging, during periods of high use, or during periods of low use where the vehicle charge can be built back up.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a grid including a plurality of charging points;
Fig. 6 shows the grid of Fig. 5 including vehicles for charging;
Fig. 7 shows a portion of the grid of Fig. 5 and a charging profile;
Fig. 8 shows the portion of the grid of Fig. 7 and a second charging profile;
Fig. 9 shows an exemplary addition of a plurality of charging profiles;
Fig. 10 shows modification of charging profiles;
Fig. 11 shows modification of charging profiles;
Fig. 12 shows task planning to be used in modifying charging profiles.

### DETAILED DESCRIPTION

In overview, the disclosure relates to charging robotic vehicles in an automated storage and retrieval grid. By using information about how the grid will be used, for example from upcoming tasks and how the robotic vehicles will be used, each existing charger can be more thoroughly utilised. That is, because the controller of the storage and retrieval grid has a good understanding of what robots will be needed and how much energy they will need, a limited charging capacity can be prioritised for the vehicles which benefit the overall system the most. It may be counterintuitive to delay charging of some vehicles, or to reduce the rate at which some vehicles charge, but for the overall system this may lead to benefits because the charging capacity is being utilised where it is needed the most. In another aspect, fewer charging power supplies can be used to supply charge to a greater number of vehicles. Installing chargers and charging capacity on a grid can be costly, difficult, or simply limited by available power supplies. The present invention may negate the requirement for additional charging power supplies whilst allowing existing or fewer power supplies to simultaneously charge more robotic vehicles.

### Automated storage and retrieval system overview

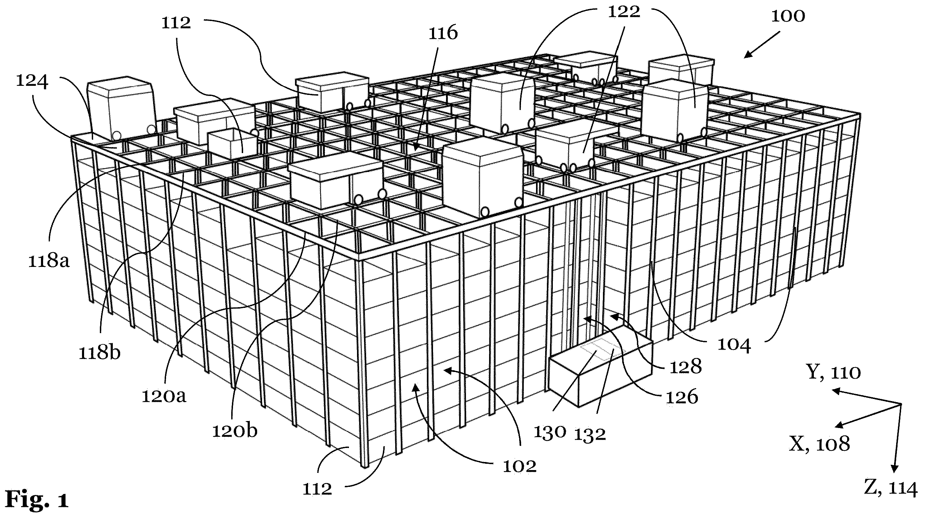

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

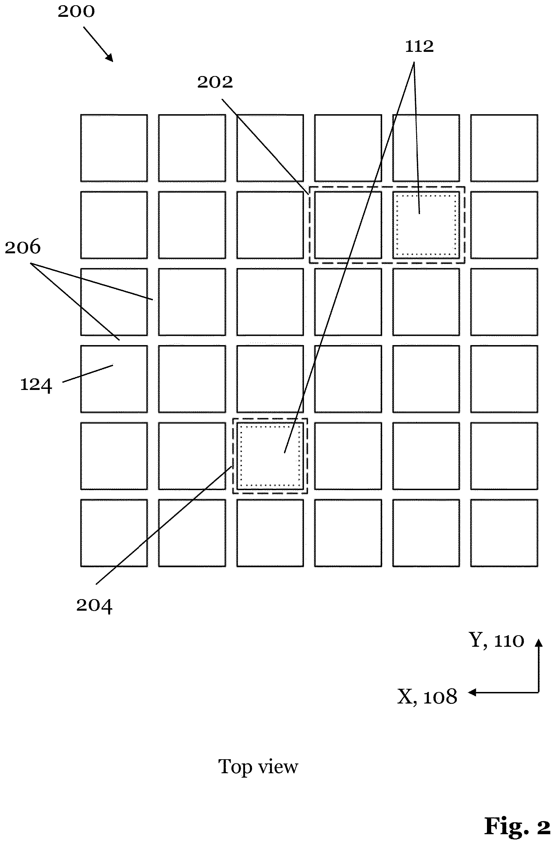

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

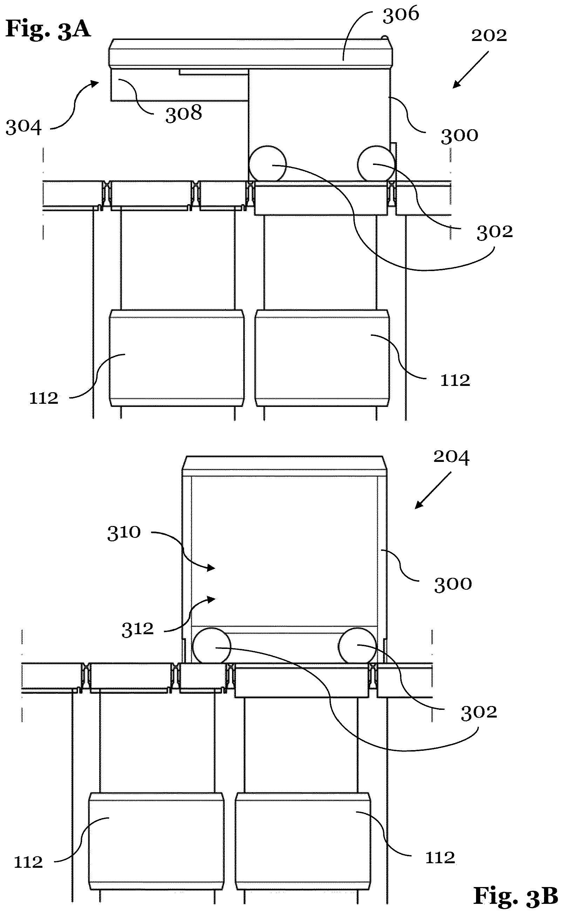

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

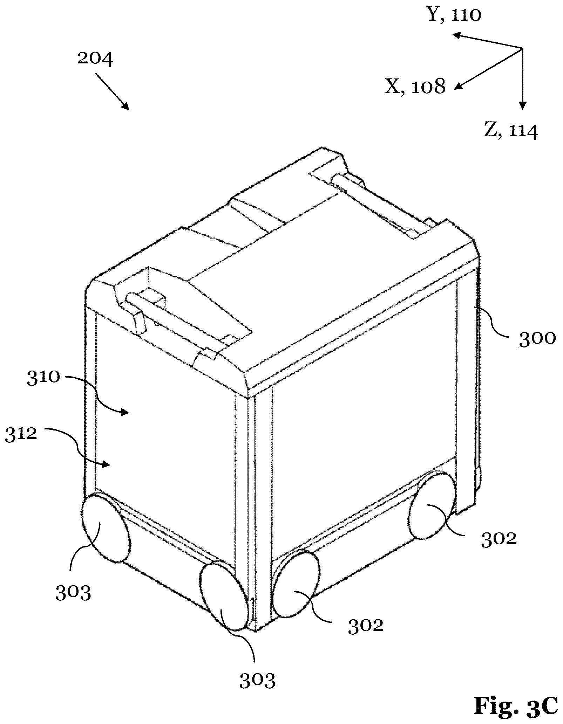

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

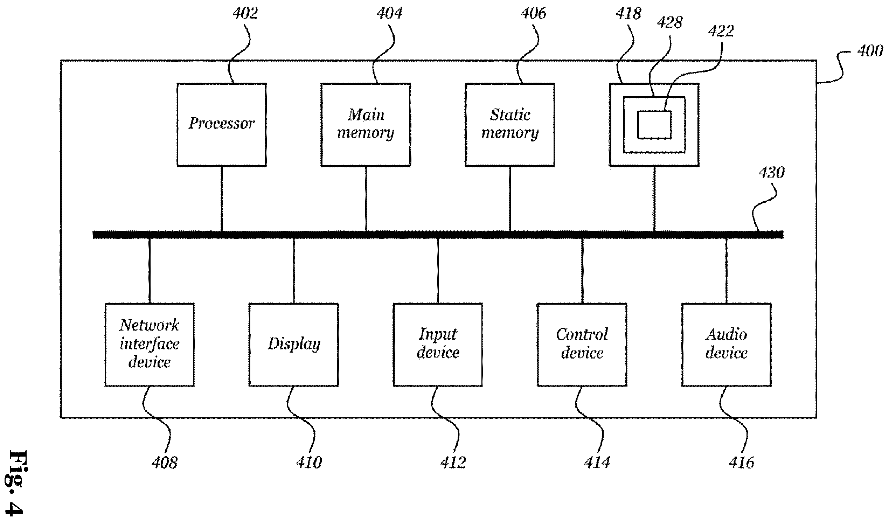

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

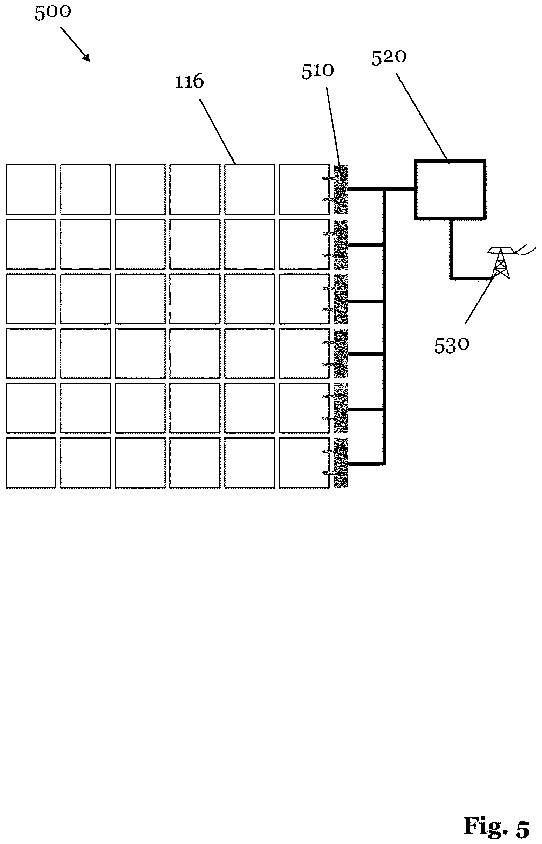

Fig. 5 shows the X-Y configuration 500 of the rail system 116 in detail together with a plurality of chargers 510. The plurality of chargers 510 are shown along one side of the X-Y configuration 500, although it is not essential that chargers 510 are located along one side. Chargers 510 may be located at other positions on the rail system 116 such as but not limited to separate charging locations that do not encroach on the main area of the rail system 116, or other positions within the rail system 116. Each charger 510 of the plurality of chargers is connected to a power supply 520. The power supply 520 is further connected to an electrical power source 530. In the example shown in Fig. 5 the plurality of chargers 510 are provided with DC electrical power from the power supply 520. The power supply 520 is provided with AC electrical power from the electrical power source 530. The power supply 520 may therefore transmit and distribute electrical power from the electrical power source 530 to the individual chargers 510. It is contemplated that the power supply 520 does not necessarily also convert the AC power from the electrical power source 530. The power supply 520 may be provided with a DC electrical power source, or the power supply 520 may distribute AC electrical power to each of the plurality of chargers 510.

The power supply 520 has a maximum power supply capacity. That is, the power supply 520 is configured to provide electrical power to the chargers 510 up to a limit. Should the power supply 520 attempt to provide electrical power above such a limit (e.g. greater than a maximum current, or a maximum power) then there may be a risk of damage to the power supply 520 by overloading or overheating internal components. The power supply 520 may include overload protection such as a fuse, a circuit breaker, or emergency shutdown to avoid the deleterious effects of overloading or overheating.

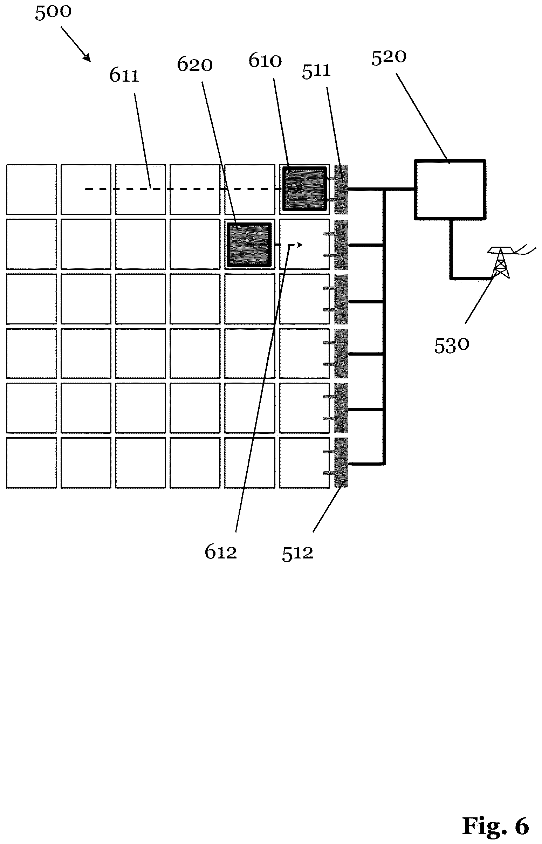

Fig. 6 shows the X-Y configuration 500 including a first vehicle 610 and a second vehicle 620. The first vehicle 610 is connected to a first charger 511 of the plurality of chargers 510. The first vehicle 610 may have moved along a path 611 to reach the first charger 511. Once the first vehicle 610 is connected to the first charger 511, charging of the first vehicle 610 may begin. The second vehicle 620 is shown in a position approaching a second charger 512 along a second path 612.

Each individual charger 510 may have a maximum charging capacity. For example, components of the charger 510 such as contacts, cables, and other electrical components may have maximum rated capacity for current or for power. The maximum charging capacity for each charger 510 may be configured such that the charger 510 meets the required charging characteristics for any individual vehicle on the grid. Since each charger 510 is configured to connect to a single vehicle at any one time, the maximum charging capacity of the charger 510 may be chosen so that it can support the charging requirements of a single vehicle.

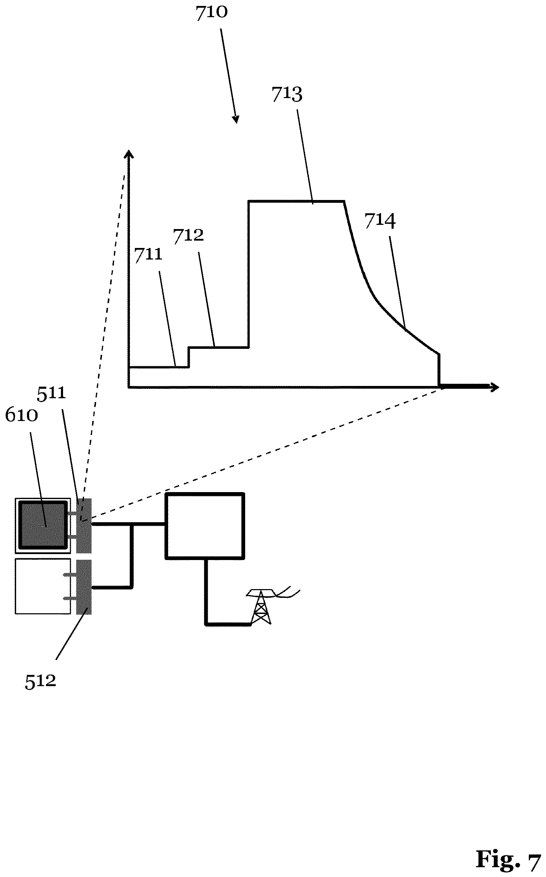

Each individual vehicle, for example first vehicle 610, may have a maximum charging rate, and an ideal charging profile. Fig. 7 shows a portion of the X-Y configuration 500 showing only two of the chargers 511, 512 for simplicity. The first vehicle 610 is connected to the first charger 511, and the second charger 512 is vacated. The first vehicle 610 may begin to charge according to a first charging profile 710. The first charging profile 710 shown in Fig. 7 is exemplary, and many other charging profiles may be used according to the circumstances, for example to suit battery type, or typical charging requirements. The first charging profile 710 is shown on a pair of axes in which the vertical axis denotes a charging current, and the horizontal axis denotes time. Units are not shown on the axes since it will be appreciated that exact figures will vary depending on system configuration and the size of vehicle batteries and capacity of the chargers. In the first profile 710, the battery is initially charged according to a trickle charge 711. The trickle charge 711 may be carried out without consideration of other parts of the charging profile 710. The trickle charge 711 may be followed by a pre-charge 712. The pre-charge 712 prepares the battery of the first vehicle 610 to be charged at a greater rate. The pre-charge 712 allows for the first vehicle 610 to warm up before charging at a greater rate so that the first vehicle is not damaged by a cold charge. After the pre-charge 712, the battery of the first vehicle 610 is charged at the main charge 713. The main charge 713 is typically carried out at the highest charging rate that the battery of the vehicle will be subjected to, although the main charge 713 may be done at a charging rate lower than the maximum charging rate that the vehicle can withstand. It is during the main charge 713 that the battery of the vehicle 610 will receive the majority of the energy it is taking on during the charging profile 710. During the main charge 713, the current will be regulated. Once the main charge 713 is complete and the battery has reached the desired charge voltage, the rate of charging ramps down gradually as the charging is regulated by the voltage in the ramp-down charging 714. Once the ramp-down charging 714 is complete, no more current is delivered to the first vehicle 610 and the vehicle 610 may be considered fully charged.

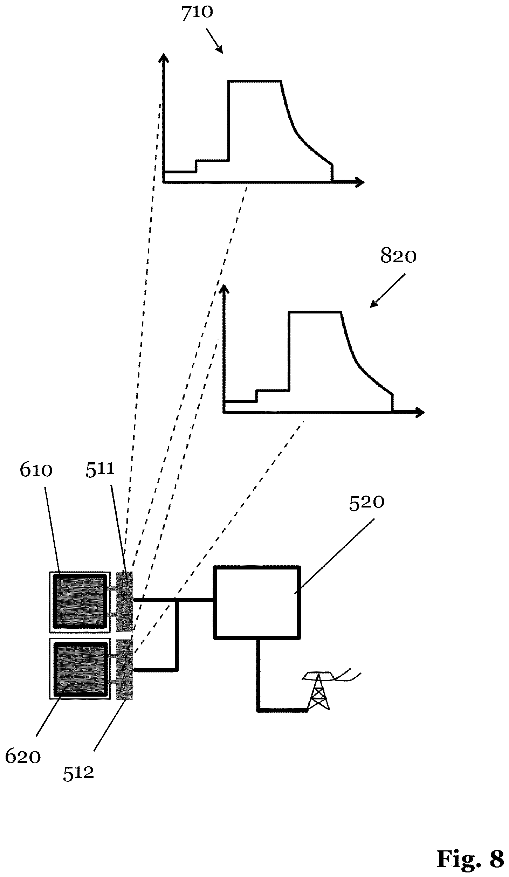

Turning to Fig. 8, the same portion of the X-Y configuration as shown in Fig. 7 is shown again, this time where the second vehicle 620 is also connected to the second charger 512. The second vehicle 620 may begin to charge according to a second charging profile 820. The shapes of the first charging profile 710 and the second charging profile 820 are shown to be the same for simplicity, but it will be appreciated that each charging profile may be different according to the circumstances, for example to suit battery type, or typical charging requirements. As shown in Fig. 8, the second charging profile 820 has begun at a later point in time than the first charging profile 710. This is depicted in Fig. 8 by displaying the second charging profile 820 to the right of the first charging profile 710. It will be appreciated that for the power supply 520, the total current that must be supplied to both the first charging point 511 and the second charging point 512 will depend on a sum of the first charging profile 710 and the second charging profile 820, but that the variations in each charging profile 710, 820 mean that this sum is not always a case of adding the maximum charging capacity during the main charge of each charging profile. In fact, the main charge of the first profile 710 may not occur at the same time as the main charge of the second profile 820.

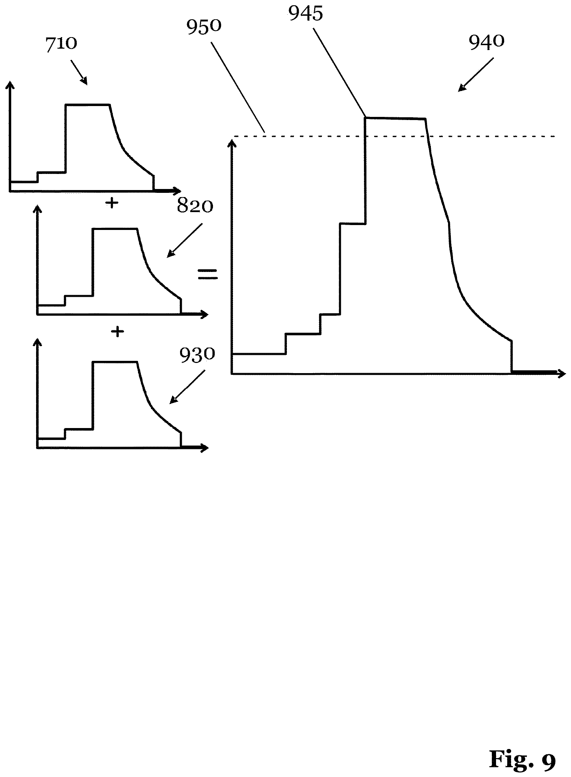

Fig. 9 shows how individual charging profiles of charging points may add together to form a more complex total charging profile required by the power supply 520. In Fig. 9, to further show complexity, a third charging profile 930 is included that may correspond to a third charging point not shown in Fig. 8. The third charging profile 930 adds to the first charging profile 710 and the second charging profile 820 already shown in Fig. 8. The total sum of the first 710, second 820, and third 930 charging profiles is shown by the sum charging profile 940. The first charging profile 710 has been shown starting prior to the second 820 and third 930 charging profiles. Therefore, to begin with, the total charging capacity required is relatively low, not exceeding the maximum charging capacity required by a single charging profile 710. However, when all three charging profiles 710, 820, 930 require their main charge at the same time 945, the sum of the three charging profiles 710, 820, 930 may exceed a maximum power supply capacity 950. The maximum power supply capacity 950 may correspond to what the power supply 520 can provide at most for a prolonged period of time. The maximum power supply capacity 950 may be chosen such that two vehicles charging with their main charge occurring at the same time does not exceed this. However, when a third vehicle requires a main charge at the same time as the first two vehicles, the maximum power supply capacity 950 may be exceeded. Whilst three charging profiles have been shown, it will be appreciated that the method may be extended to any number of charging points and charging of vehicles simultaneously. If the maximum power supply capacity 950 may be exceeded by the requirements of the charging vehicles, the present method may mitigate this.

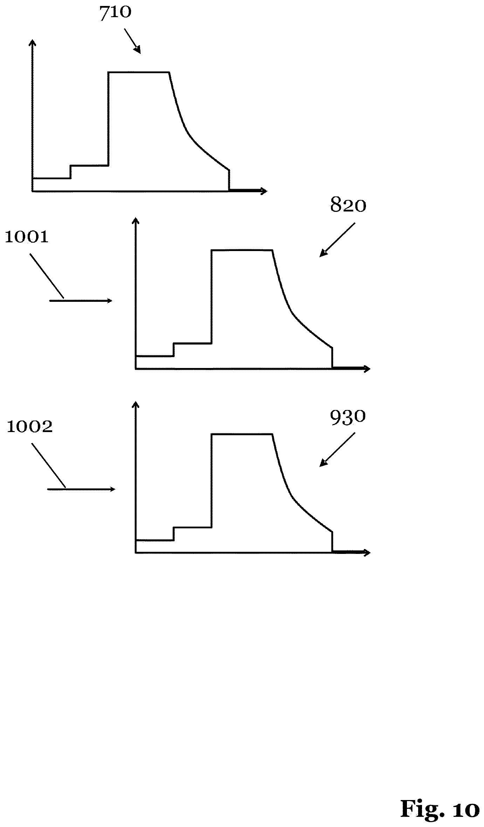

Fig. 10 schematically shows the modification of one or more charging profiles such that the sum of the charging profiles does not exceed the maximum power supply capacity 950. The first charging profile 710 is shown in combination with the second charging profile 820 and the third charging profile 930. The second charging profile has been time shifted 1001 so that the entire second charging profile 820 occurs at a later time than it otherwise would have done. The third charging profile 930 has also been time shifted 1002 by a corresponding amount so that the third charging profile 930 occurs at a later time than it otherwise would have done. By time shifting the second charging profile 820, the main charge of the second charging profile 820 no longer occurs at the same time as the main charge of the first charging profile 710. In this way, by the time the main charge of the second charging profile 820 begins, the power required by the first charging profile 710 has already begun to decrease. The same time shift 1002 has been applied to the third charging profile 930. In this way, there is no point in time during which the main charge of all three of the charging profiles 710, 820, 930 happens altogether. Thus, the sum of all of the charging profiles 710, 820, 930 does not exceed the maximum power supply capacity 950.

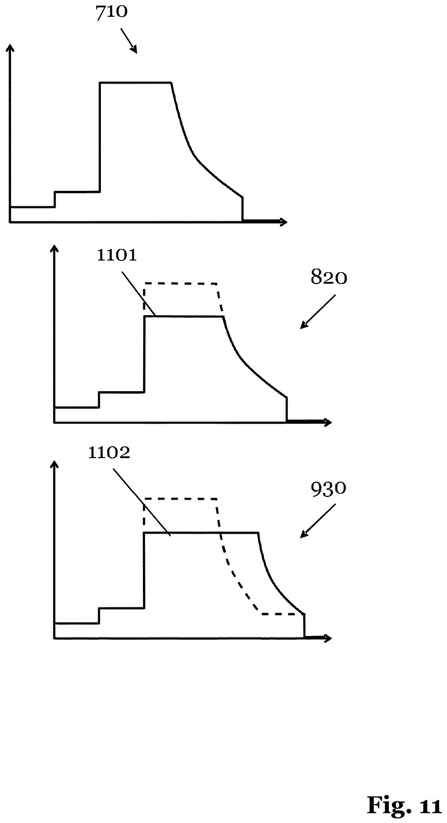

Fig. 11 shows another modification of one or more of the charging profiles such that the sum of the charging profiles does not exceed the maximum power supply capacity 950. It will be appreciated that a combination of modifications to the charging profiles, or use of one or other of the modifications may be used to prevent the sum of the charging profiles exceeding the maximum power supply capacity 950. Starting again with the first charging profile 710, a second charging profile 820 may be required at a later point in time. The second charging profile 820 may include a main charge that overlaps with a main charge of the first profile 710. To reduce the sum of the profiles 710, 820, the second charging profile may be modified to clip 1101 the main charge. That is, the main charge of the second charging profile 820 may happen at a lower power or current than it otherwise would do. By reducing the power of the second charging profile 820 in this way, the second vehicle 620 may not charge to a full capacity, but the first vehicle 610 will have received a full charge. However, the sum of the first 710 and the second 820 charging profiles will have been kept to a level below the maximum power supply capacity 950. The third charging profile 930 shows another modification to the charging profile. In the third charging profile 930 shown in Fig. 11, the main charge of the third charging profile 930 has been distributed over a longer time period. That is, the charging of the third vehicle during its main charge is done at a lower current, but over a longer period of time. In this way, the maximum power supply capacity 950 may not be exceeded, but the third vehicle may still be provided with a full charge. In some charging profiles, there may be considered to be a peak charge at which rapid charging occurs. As shown in Figs. 10 and 11, the peak charge may be time-shifted so that it occurs at a different point in time.

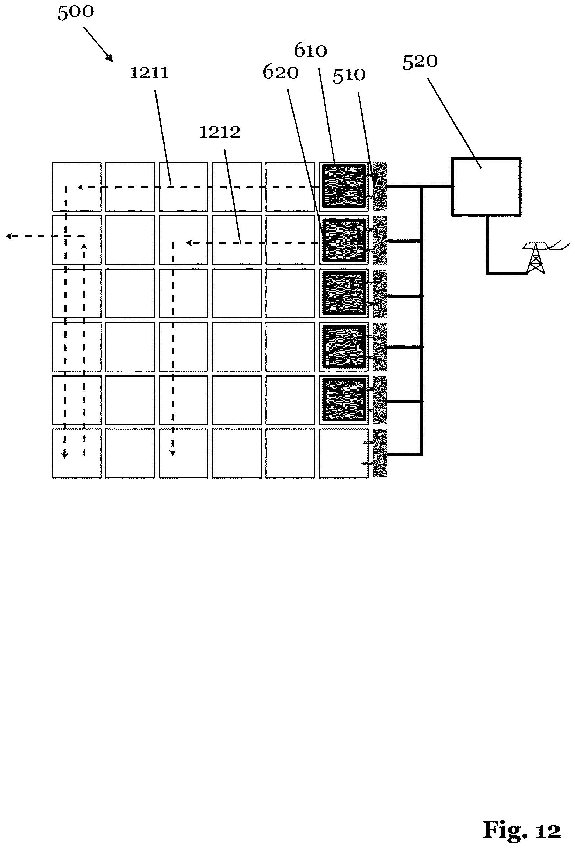

Turning now to Fig. 12, it will be appreciated that modification of one or more of the charging profiles 710, 820, 930, may be done responsively to future requirements of the vehicles. Fig. 12 shows the X-Y configuration 500 of the rail system 116 in detail together with the plurality of chargers 510. The first vehicle 610 is shown charging, but it is known from the control system what tasks are going to be required of the first vehicle 610 once charging is complete. An exemplary first task 1211 is shown in Fig. 12. The first task 1211 is relatively long, includes numerous stops, and may involve using a large amount of energy from the first vehicle's 610 battery. The second vehicle 620 is also shown charging, and has an exemplary second task 1212 to complete after charging. Compared to the first task 1211, the second task 1212 is relatively shorter, involves fewer stops, and may involve using a relatively small amount of energy from the second vehicle's 620 battery.

In response to determining the first task 1211 and the second task 1212, knowing the relative requirements of the tasks, the charging profiles 710 and 820 may be adjusted accordingly. To account for the greater requirements of the first task 1211, the first charging profile 710 may remain unmodified. To account for the lesser requirements of the second task 1212, the second charging profile 820 may be modified. In this way, the maximum power supply capacity 950 can be used according to where it is most needed. In this case, for the first task 1211 and for the first vehicle 610.

Alternatively to the requirements of the first task 1211, and the second task 1212, the tasks 1211, 1212 may be assigned a priority. The priority of the first task 1211 may be a number or category indicating the importance of the task. For example, some tasks may need to be carried out sooner than other tasks because of their overall impact on the rest of the grid. In other examples, some tasks may correspond to expedited or high importance retrieval, such as a customer who requires expedited delivery. The priority of the second task 1212 may be a corresponding number or category indicating the importance of the task. For example, the second task 1212 may be a task that has a lower overall impact on the grid than the first task, or the second task 1212 may correspond to a non-expedited delivery. In any case, the first task 1211 and the second task 1212 may each have a level of priority. In response to determining that the second task 1212 has a lower priority than the first task 1211, the second charging profile 820 may be modified. In this way, the maximum power supply capacity 950 is prioritised for the tasks which have the highest priority level first. The priority of tasks, and therefore of the charging profiles may be determined by a central controller such as the control system of Fig. 4. The overall impact of the charging profiles and the priority of tasks on the grid may be calculated by assigning a cost for the completion of each task. For example, each task may have an overall cost calculated from the number of stops, the length or time of running the task, waiting for space to complete the task, crossing the paths of other vehicles, preventing other vehicles from completing their tasks without stopping, as well as other factors within the skilled person's understanding. The cost provides a metric for assessing each of the tasks, such as the first task 1211 and the second task 1212, so that a central controller may compare each of the tasks, and accordingly modify the charging profiles 710, 820, 930.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A charger for an automated storage and retrieval system comprising:
a first charging point configured to charge a first connected vehicle according to a first charging profile,
a second charging point configured to charge a second connected vehicle according to a second charging profile and concurrently to the charging of the first connected vehicle, and
a power supply configured to supply power to the first charging point and the second charging point, the power supply having a maximum power supply capacity, wherein the charger is configured to
determine that a sum of the first charging profile and the second charging profile at a first point in time exceeds the maximum power supply capacity, and in response to determining,
modify the second charging profile such that the sum of the first charging profile and the second charging profile at the first point in time does not exceed the maximum power supply capacity.

2. A method of charging a plurality of vehicles in an automated storage and retrieval system including a charger, the charger comprising a first charging point, a second charging point, and a power supply configured to supply power to the first charging point and the second charging point, the power supply having a maximum power supply capacity, the method comprising:
determining a first charging profile for charging a first vehicle of the plurality of vehicles at the first charging point,
determining a second charging profile for charging a second vehicle of the plurality of vehicles at the second charging point,
determining that a sum of the power required for the first charging profile and the power required for the second charging profile at a first point in time exceeds the maximum power supply capacity, and
in response to determining that the sum exceeds the maximum power supply capacity at the first point in time, modifying the second charging profile such that the sum does not exceed the maximum power supply capacity at the first point in time.

3. The charger of claim 1 or the method of claim 2, wherein modifying the second charging profile comprises clipping the second charging profile.

4. The charger or method of any preceding claim, wherein the second charging profile covers a first time period, and modifying the second charging profile comprises distributing the energy supply of the second charging profile over a second time period longer than the first time period.

5. The charger or method of any preceding claim, wherein the second charging profile has at least one peak, and wherein modifying the second charging profile comprises time-shifting the at least one peak.

6. The charger or method of any preceding claim, further comprising:
determining a first task assigned to the first vehicle to be completed after charging according to the first charging profile,
determining a second task assigned to the second vehicle to be completed after charging according to the second charging profile,
determining a first priority of the first task and a second priority of the second task,
determining that the first priority is greater than the second priority, wherein modifying the second charging profile is done in response to determining that the first priority is greater than the second priority.

7. The charger or method of claim 6, wherein the first priority and the second priority are determined by a central controller of the automated storage and retrieval system.

8. The charger or method of claim 7, wherein the central controller determines the first priority and the second priority based on one or more of an impact of the task completion on the operation of the rest of the automated storage and retrieval system, a time sensitivity of the task completion, a cost to the route planning of one or more vehicles of the automated storage and retrieval system, and a length, time, or cost of task completion.

9. The charger or method of any of claims 6 to 8, wherein the first task has a first cost, and the second task has a second cost, and wherein the first cost is greater than the second cost.

10. The charger or method of claim 8 or claim 9, wherein cost is calculated based on path length of the task, desired vehicle speed during the task, operations performed during the task, and/or predicted weight of the vehicle during the task.

11. A computer readable medium comprising instructions which, when executed by a processor in an automated storage and retrieval system, cause a charger of the automated storage and retrieval system to perform a method according to any of claims 2 to 10.
